# EUROPEAN PATENT APPLICATION

(11) **EP 1 655 510 A2**
(43) Date of publication of application: **10.05.2006**
(21) Application number: 05023463.2
(22) Date of filing: 27.10.2005
(51) Int. Cl.: F16H 7/08

(54) **Tensioning device**

(30) Priority: 08.11.2004 US 983988
(71) Applicant: BorgWarner Inc., Auburn Hills MI 48326 (US)
(72) Inventor: Wake, Junichi, Nabari-shi Mie, 518-0495 (JP); Seungpyo, Shin, Hwasung-Shi Kyunggi-do (KR); Yoshida, Yukio, Nabari-shi Mie, 518-0495 (JP); Barrette, Simon, Meito ku, Nagoya, Aichi, 465-0014 (JP); Lei, Cai, Nabari-shi Mie, 518-0495 (JP); Haesloop, J. Christian, Ithaca New York 14850 (US); Tsuruta, Shinji, Nabari-shi Mie, 518-0495 (JP)
(74) Representative: Petruzziello, Aldo

(57) **Abstract**

A tensioning device (1) to impart tension to a chain or belt comprising a tensioner arm (2), a supporting member, a pivot, and a biasing element (4). The tensioner arm (2) has a proximal end (21) with a curved engaged surface (25) formed on a lower surface thereof, a distal end (22) opposite the proximal end (21), and an arcuately curved chain sliding surface (2a) extending between the proximal end (21) and the distal end (22). The supporting member has an engaging surface (32a,32a') for slidably contacting the engaged surface (25) of the proximal end (21) of the tensioner arm (2), such that the force exerted by a chain passing over the chain sliding surface (2a) is transmitted from the engaged surface (25) to the engaging surface (32a,32a'). The pivot couples the tensioner arm (2) to the supporting member. The biasing element (4) is between the supporting member and imparts a resilient force on the distal end (22) of the tensioner arm (2).

## Description

### BACKGROUND OF THE INVENTION

### FIELD OF THE INVENTION

The invention pertains to the field of tensioning devices that impart tension to a chain, belt or the like. More particularly, the invention pertains to an improvement in the structure of the tensioning device to advance durability.

### DESCRIPTION OF RELATED ART

In automobile engines, a tensioner is used to impart tension to a timing chain or auxiliary drive chain for an oil pump and the like. A tensioner is generally comprised of a tensioner arm with a chain sliding surface, a pivoting pin to pivotably support the proximal end portion of the tensioner arm, and a biasing means to apply resilient force to the distal end portion of the tensioner arm.

During operation, a chain travels along the chain sliding surface of the tensioner arm. During that time, a resilient force of the biasing means acts on the chain through the tensioner arm to maintain tension in the chain. When tension in the chain varies during operation, the tensioner arm moves toward or away from the chain by rotating around the pivoting pin, thereby maintaining contact of the chain sliding surface of the tensioner arm on the chain to impart an appropriate compressive force.

However, in prior art tensioners, the proximal end portion of the tensioner arm rotates and slides on the outer circumferential surface of the pivoting pin, causing a compressive force to be applied from the chain during rotation of the tensioner arm, severely wearing the pivoting pin and decreasing durability of the tensioner. A pivoting pin of a large diameter may be adopted but the space for housing the tensioner arm limits the size of the proximal end portion of the tensioner arm. Therefore, it is difficult to enlarge the proximal end portion of the tensioner arm in conformity with the enlarged pivoting pin. As a result, the conventional tensioners have a limited durability. Furthermore, the addition of the separate pivot pin increases manufacturing costs.

### SUMMARY OF THE INVENTION

A tensioning device according to the present invention includes a tensioner arm having an arcuately curved chain sliding surface that extends between a proximal end portion and a distal end portion, a supporting member having a pivoting portion at one end to pivotably support the proximal end portion of the tensioner arm and an engaging surface to slidably contact an engaged surface formed at the proximal end portion of the tensioner arm, and a biasing means provided at the supporting member to impart a resilient force to the tensioner arm.

According to the present invention, during operation of the tensioner arm, the proximal end portion of the tensioner arm rotates around the pivoting portion of the supporting member and the engaging surface of the supporting member slides along the engaged surface of the proximal end portion of the tensioner arm. That is, in this case, the proximal end portion of the tensioner arm rotates to slide not on the pivoting portion but on the engaged surface of the supporting member, thereby preventing an excessive compressive load from being applied to the pivoting portion, thus improving durability of the entire device.

The engaged surface may be a concavely curved surface and the engaging surface may be a convexly curved surface that corresponds to the concavely curved surface of the engaged surface. Alternatively, the engaged surface may be a convexly curved surface and the engaging surface may be a concavely curved surface that corresponds to the convexly curved surface of the engaged surface.

Each of the curved surfaces may be formed on the outer circumferential side of the pivoting portion and a radius of curvature of each of the curved surfaces may be greater than that of the pivoting portion.

The proximal end portion of the tensioner arm may have a pivoting pin of a non-circular cross sectional shape. The pivoting pin has a small width portion and a large width portion greater than the small width portion. The pivoting portion of the supporting member may have a pin aperture to receive the pivoting pin and a groove formed in connection with the pin aperture such that the small width portion of the pivoting pin can pass through the groove but the large width portion of the pivoting pin cannot pass through the groove.

In this case, when the proximal end portion of the tensioner arm is fitted onto the pivoting portion of the supporting member, the pivoting pin is inserted into the groove of the pivoting portion toward the pin aperture with the small width portion of the pivoting pin is aligned with the groove. Thereafter, the proximal end portion of the tensioner arm is rotated. Thereby, the small width portion of the pivoting pin is transferred to the position where the small width portion does not face the groove of the pivoting portion. Alternatively, the large width portion of the pivoting pin is transferred to the position where the large width portion faces the groove of the pivoting portion. As a result, the pivoting pin is prevented from being disengaged from the pin aperture.

Alternatively, the pivoting portion of the supporting member may have a pivoting pin of a non-circular cross sectional shape with a small and large width portion. The proximal end portion of the tensioner arm may have a pin aperture to receive the pivoting pin and a groove formed in connection with the pin aperture such that the small width portion of the pivoting pin can pass through the groove but the large width portion of the pivoting pin cannot pass through the groove.

In this case as well, when the proximal end portion of the tensioner arm is fitted onto the pivoting portion of the supporting member, the pivoting pin is inserted into the groove of the pivoting portion toward the pin aperture with the small width portion of the pivoting pin aligned with the groove. Thereafter, the proximal end portion of the tensioner arm is rotated. Thereby, the small width portion of the pivoting pin is transferred to the position where the small width portion does not face the groove of the proximal end portion of the tensioner arm. Alternatively, the large width portion of the pivoting pin is transferred to the position where the large width portion faces the groove of the proximal end portion of the tensioner arm. As a result, the pivoting pin is prevented from being disengaged from the pin aperture.

The pivoting pin and the groove may be oriented toward the direction in which the pivoting pin will not be disengaged from the groove during operation of the tensioner arm. In other words, the orientation of the pivoting pin and the groove may be determined in such a way that the small width portion of the pivoting pin will not align with the groove over the range of rotation of the tensioner arm.

The pivoting pin may have a generally square cross sectional shape or a generally D-shaped cross section. At least one of the tensioner arm or the supporting member may have a regulating portion to regulate rotation of the tensioner arm.

### BRIEF DESCRIPTION OF THE DRAWINGS

FIG. 1 is a perspective view of a tensioning device according to a first embodiment of the present invention;
FIG. 2 is a perspective view of a tensioner arm constituting a tensioning device of FIG. 1;
FIG. 2A is an enlarged end view of a pivoting pin formed at the proximal end portion of the tensioner arm of FIG. 2;
FIG. 3 is a perspective view of a tensioner body as a supporting member constituting a tensioner device of FIG. 1;
Fig. 4 is a schematic illustrating a process of fitting the tensioner arm onto the tensioner body to assemble the tensioning device of FIG. 1;
FIG. 5 is a perspective view of a portion of the tensioning device according to a second embodiment of the present invention;
FIG. 5A is an enlarged end view of a pivoting pin of a bracket portion of FIG. 5;
Fig. 6 is a schematic illustrating a process of fitting the tensioner arm onto the tensioner body to assemble the tensioning device of FIG. 5;
Fig. 7 is a schematic illustrating a process of fitting the tensioner arm onto the tensioner body to assemble the tensioning device of FIG. 5;
FIG. 8 is a perspective view of a portion of the tensioning device according to a third embodiment of the present invention;
FIG. 9 is a bottom perspective view of a portion of the tensioning device of FIG. 8;
FIG. 10 is a perspective view of a tensioner arm constituting a tensioning device of FIG. 8;
FIG. 11 is a perspective view of a portion of the tensioning device according to a fourth embodiment of the present invention;
FIG. 12 is a perspective view of a portion of the tensioning device according to a fifth embodiment of the present invention;
FIG. 13 is a perspective view of a tensioner arm constituting a tensioning device of FIG. 12;
FIG. 14(a) is a front side elevational view of a bracket portion of the tensioner body constituting a tensioning device of FIG. 12; and
FIG. 14(b) is a backside elevational view of a bracket portion of the tensioner body.

### DETAILED DESCRIPTION OF THE INVENTION

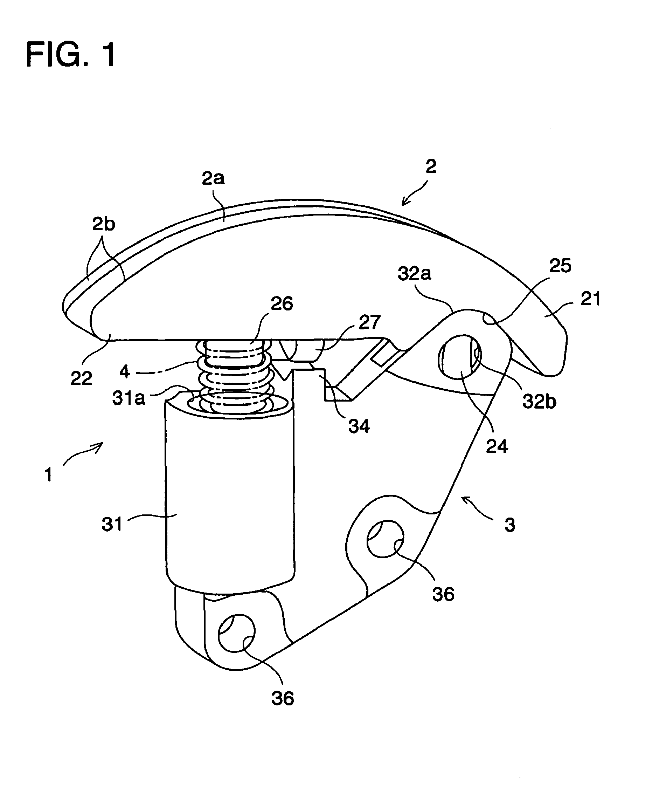

FIGS. 1 through 4 illustrate a first embodiment of the present invention. As shown in FIG. 1, a tensioning device 1 is comprised of a tensioner arm 2 with an arcuately curved chain sliding surface 2a, a tensioner body 3 as a supporting member to pivotably support a proximal end portion 21 of the tensioner arm 2, and a coil spring 4 as a biasing means housed in a hole 31a of a cylindrical spring housing portion 31 formed at the tensioner body 3 to impart a resilient force to a distal end portion 22 of the tensioner arm 2.

The tensioner arm 2 has a pair of sidewall portions 2b formed on opposite sides of the chain sliding surface 2a and extending along the chain sliding surface 2a. These sidewall portions 2b are provided to maintain a chain (not shown) in place on the chain sliding surface 2a during travel of the chain.

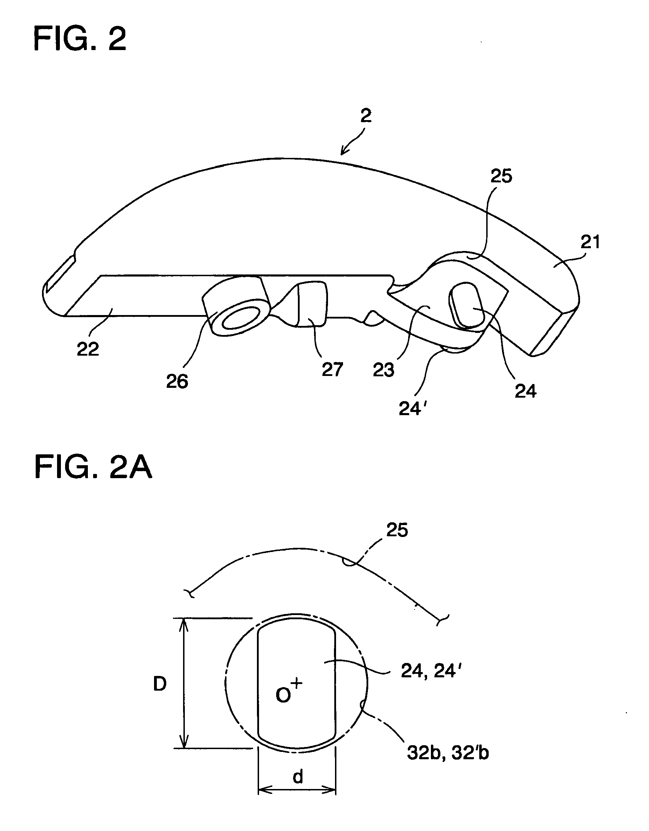

As shown in FIG. 2, the proximal end portion 21 of the tensioner arm 2 has a downwardly protruding flange portion 23 formed centrally in the thickness direction thereof. On opposite side surfaces of the flange portion 23, a pivoting pin 24, 24' of a non-circular cross sectional shape is respectively formed integrally with the flange portion 23.

By way of an example shown in FIG. 2A, each of the pivoting pins 24, 24' has a generally square cross sectional shape, one pair of opposite sides are linearly formed and the other pair of opposite sides are arcuately formed. Each of the pivoting pins 24, 24' has a small width portion with a measurement of d and a large width portion with a measurement of D (>d).

The proximal end portion 21 of the tensioner arm 2 has a pair of concavely curved surface (or engaged surface) 25 formed beside the flange portion 23. On the bottom surface of the tensioner arm 2, a cylindrical shaped and downwardly extending spring retainer 26 is formed at a position corresponding to the coil spring 4 housed in the tensioner body 3. Also, on the bottom surface of the tensioner arm 2, a downwardly extending contact portion 27 is provided.

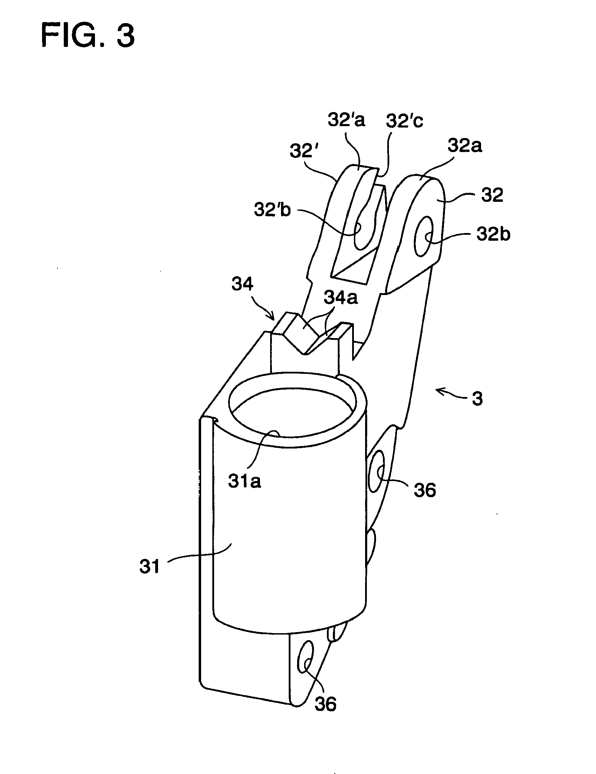

As shown in FIG. 3, one end of the tensioner body 3 is bifurcated to form a pair of opposed bracket portions (or pivoting portions) 32, 32'. The spacing between the bracket portions 32 and 32' is slightly greater than the thickness of the flange portion 23 provided at the proximal end portion 21 of the tensioner arm 2. The outer circumferential surfaces of the bracket portions 32, 32' are formed with convexly curved surfaces (or engaging surfaces) 32a, 32'a, respectively, adapted to slide along the concavely curved surface 25 of the proximal end portion 21 of the tensioner arm 2 during rotation of the tensioner arm 2.

Round pin apertures 32b, 32b' are formed to penetrate the bracket portions 32, 32' in the thickness direction. The center axis of the pin aperture 32b coincides with the center axis of the pin aperture 32'b. As shown in FIG. 2A, the diameter of each of the pin apertures 32b, 32'b is substantially equal to the measurement D of the large width portion of the pivoting pin 24, 24'. Also, the center O of each pin aperture 32b, 32'b substantially coincides with the center of each pivoting pin 24, 24' and the center of curvature of the concavely curved surface 25.

Opposed inside surfaces of the bracket portions 32, 32' has grooves 32c, 32'c (only the groove 32c is shown in FIG. 3), respectively, formed thereon to connect with the pin apertures 32b, 32'b. The width w of each groove 32c, 32'c is slightly greater than the small width d of each pivoting pin 24, 24' and smaller than the large width D. That is, an inequality, d<w<D is satisfied.

Therefore, only in the case where the small width portion of a measurement d is aligned with the groove 32c, 32'c, the pivoting pin 24, 24' can pass through the groove 32c, 32'c, and in the case where the small width portion of a measurement d is not aligned with the groove 32c, 32'c, the pivoting pin 24, 24' can not pass through the groove 32c, 32'c. Also, over the range of rotation of the tensioner arm 2 during operation, the small width portion of the pivoting pin 24, 24' is adapted not to be aligned with the groove 32c, 32'c.

A stop 34 is provided on the tensioner body 3 at a position corresponding to the contact portion 27 of the tensioner arm 2. The stop 34 has an inclined surface 34a adapted to contact an inclined surface of the contact portion 27. The contact portion 27 and the stop 34 constitute a regulating portion that regulates rotation of the tensioner arm 2. In addition, the tensioner body 3 has a plurality of attachment holes 36 to receive bolts to fixedly attach the tensioner body 3 to the engine.

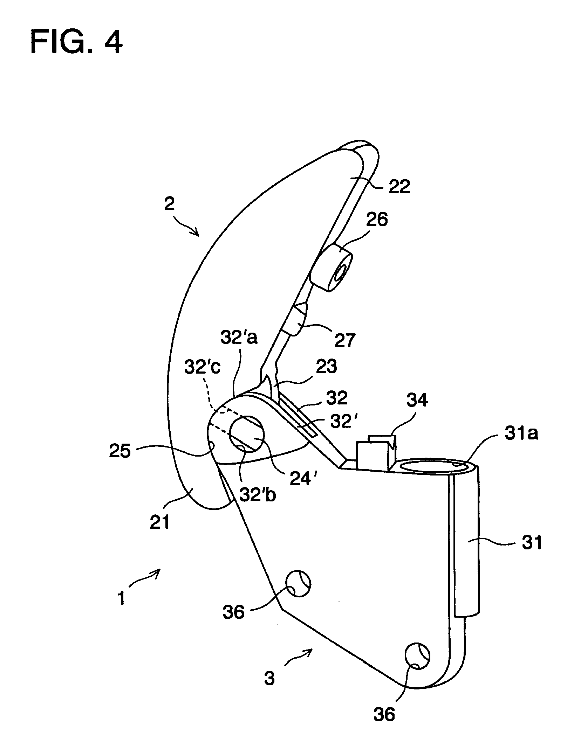

Next, when the tensioner arm 2 is fitted onto the tensioner body 3, the tensioner arm 2 is tilted nearly upright as shown in FIG. 4, with the small width portion of each pivoting pin 24, 24' aligned with each groove 32c, 32'c of the bracket portion 32, 32', so that the pivoting pin 24, 24' is inserted into the groove 32c, 32'c. In such a way, the pivoting pin 24, 24' is placed in the pin aperture 32b, 32'b, respectively, and the concavely curved surface 25 of the proximal end portion 21 of the tensioner arm 2 contacts the convexly curved surface 32a, 32'a of the bracket portion 32, 32'.

Then, with the coil spring 4 housed in the spring housing portion 31 of the tensioner body 3, the tensioner arm 2 is rotated toward the coil spring 4. Thereby, as shown in FIG. 1, the distal end side of the tensioner arm 2 contacts the coil spring 4 and is supported by the coil spring 4. In such a manner, the tensioning device 1 is completed. Then, the tensioning device 1 is fixedly attached to the engine by bolts inserted into the attachment holes 36 of the tensioner body 3.

During operation, when the chain travels to slide along the chain sliding surface 2a of the tensioner arm 2, a compressive force applied from the chain to the tensioner arm 2 through tension in the chain balances a resistance force applied from the tensioner arm 2 to the chain through the elastic resilience of the coil spring 4.

Also, during operation, clockwise or counterclockwise rotation of the tensioner arm 2 around the center O of the pin aperture 32b, 32'b of the tensioner body 3 according to variation in the chain tension changes the extent of movement of the tensioner arm 2 relative to the chain, thereby maintaining necessary tension in the chain.

In this case, during rotation of the tensioner arm 2, the concavely curved surface 25 of the proximal end portion 21 of the tensioner arm 2 slides on the convexly curved surface 32a, 32'a of the bracket portion 32, 32' of the tensioner body 3. That is, the compressive force applied from the chain to the tensioner arm 2 is not supported only by the pivoting pin 24, 24' but mainly by the convexly curved surface 32a, 32'a of the bracket portion 32, 32', thereby preventing excessive compressive load from being applied to the pivoting pin 24, 24' from the chain. As a result, durability of the entire device is advanced.

Moreover, in this case, oscillation of the chain that occurs during operation can be damped through sliding movement between the concavely curved surface 25 of the proximal end portion 21 of the tensioner arm 2 and the convexly curved surface 32a, 32'a of the bracket portion 32, 32'.

In this first embodiment, an example was shown where a pivoting pin is provided with the tensioner arm and a pin aperture to receive the pivoting pin is provided with the tensioner body, but the present invention is not limited to such an example. In the following embodiments, an example is shown where a pivoting pin is provided with the tensioner body and a pin aperture to receive the pivoting pin is provided with the tensioner arm.

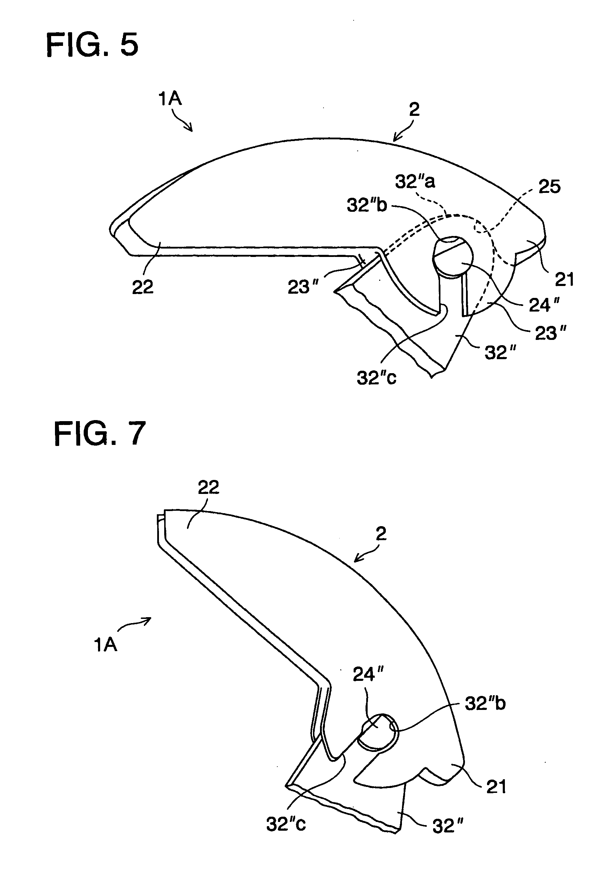

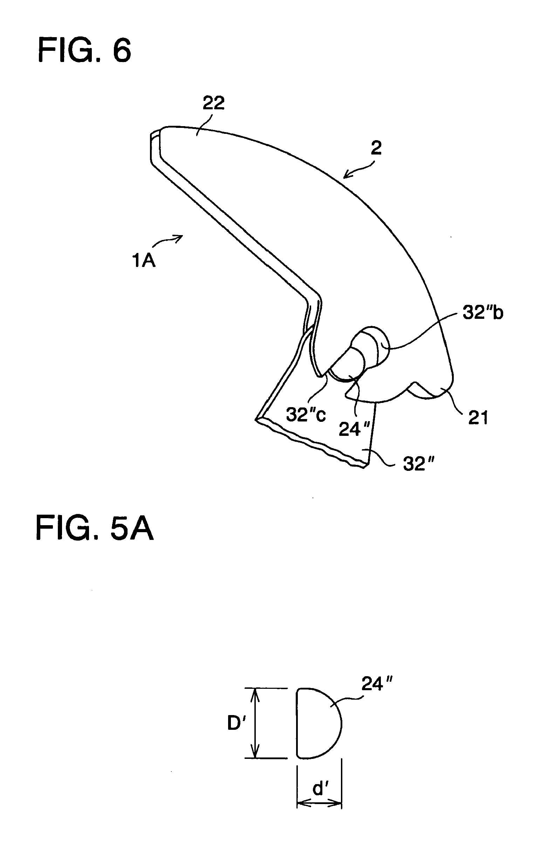

FIGS. 5 through 7 illustrate a second embodiment of the present invention. In a tensioning device 1A as shown in FIG. 5, a bracket portion 32" of a tensioner body is not bifurcated but formed of a single plate-like portion. A pivoting pin 24" is formed on and protrudes from opposite sides of the bracket portion 32". In the drawings, a pivoting pin 24" is shown only on one side of the bracket portion 32". As shown in FIG. 5A, the pivoting pin 24" has a D-shaped cross section including a small width portion of a measurement of d' and a large width portion of a measurement of D' (>d'). A convexly curved surface 32"a is formed on the upper portion of the outer circumference of the bracket portion 32".

On the other hand, the proximal end portion 21 of the tensioner arm 2 is bifurcated to form a pair of leg portions 23". The bracket portion 32" is inserted between the pair of leg portions 23". Each of the leg portions 23" is formed with a pin aperture 32"b to receive the pivoting pin 24" and a groove 32"c in connection with the pin aperture 32"b. The width w' of the groove 32"c is slightly greater than the small width portion of a measurement d' of the pivoting pin 24" and smaller than the large width portion of a measurement D'. That is, an inequality, d'<w'<D' is satisfied.

In this embodiment as well, the small width portion of a measurement d' of the pivoting pin 24" is not aligned with the groove 32"c over the range of rotation of the tensioner arm 2 during operation. Also, between the pair of leg portions 23" of the proximal end portion 21 of the tensioner arm 2, a concavely curved surface 25 is formed to slide on the convexly curved surface 32"a of the bracket portion 32" during rotation of the tensioner arm 2.

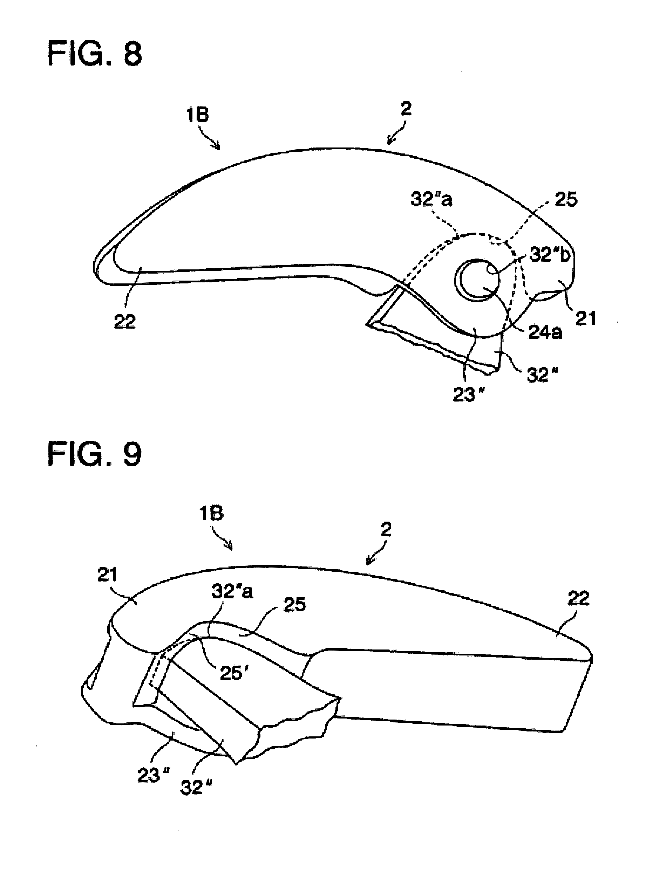

When fitting the tensioner arm 2 onto the bracket portion 32", the tensioner arm 2 is tilted upwardly as shown in FIG. 6, with each groove 32"c of the proximal end portion 21 of the tensioner arm 2 aligned with the small width portion of each pivoting pin 24" of the bracket portion 32", such that the pivoting pin 24" is inserted into the groove 32"c. In such a way, as shown in FIG. 7, the pivoting pin 24" is placed in the pin aperture 32"b and the concavely curved surface 25 of the proximal end portion 21 of the tensioner arm 2 contacts the convexly curved surface 32"a of the bracket portion 32". From this state, by rotating the tensioner arm 2 around the pivoting pin 24", the tensioning device is completed, shown in FIG. 5.

In this case as well, during rotation of the tensioner arm 2, the concavely curved surface 25 of the proximal end portion 21 of the tensioner arm 2 slides on the convexly curved surface 32"a of the bracket portion 32" of the tensioner body 3, thereby preventing excessive compressive load from being applied to the pivoting pin 24" from the chain. As a result, durability of the entire device is advanced.

FIGS. 8 to 10 illustrate a third embodiment of the present invention. As shown in FIGS. 8 and 9, similar to the second embodiment, a tensioner body is not bifurcated at the bracket portion 32" and the bracket portion 32" is formed by a single plate-like portion. In this third embodiment, a pivoting pin 24a protrudes from only one side of the bracket portion 32". Also, the pivoting pin 24a is a round pin and has a circular cross section.

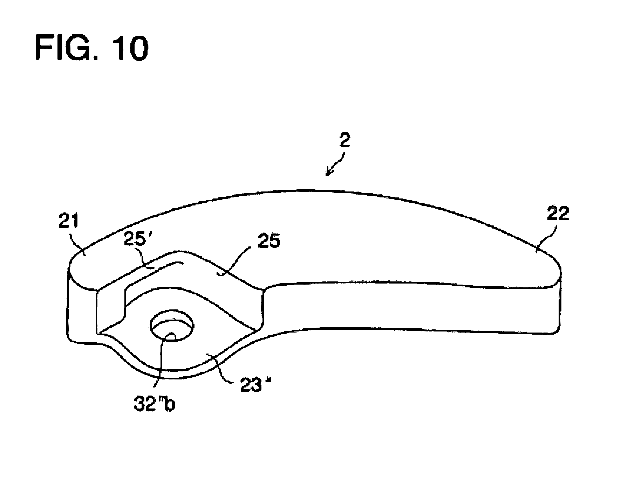

On the other hand, the proximal end portion 21 of the tensioner arm 2 has a single leg portion 23". The leg portion 23" has a pin aperture 32"b formed therein to receive the pivoting pin 24a, as shown in FIG. 10.

The proximal end portion 21 of the tensioner arm 2 is formed with a concavely curved surface 25 adapted to slide on a convexly curved surface 32"a of the bracket portion 32" during rotation of the tensioner arm 2. A downwardly extending flange portion 25' is formed on a portion of the concavely curved surface 25. Thereby, when the bracket portion 32" is fitted to the proximal end portion 21 of the tensioner arm 2, the upper side surface of the bracket portion 32" is sandwiched between the leg portion 23" of the proximal end portion 21 of the tensioner arm 2 and the flange portion 25', as shown in FIG. 9, preventing the tensioner arm 2 from being easily disengaged from the bracket portion 32".

In this case as well, during rotation of the tensioner arm 2, the concavely curved surface 25 of the proximal end portion 21 of the tensioner arm 2 slides on the convexly curved surface 32"a of the bracket portion 32" of the tensioner body 3, thereby preventing excessive compressive load from being applied to the pivoting pin 24a from the chain. As a result, durability of the entire device is advanced.

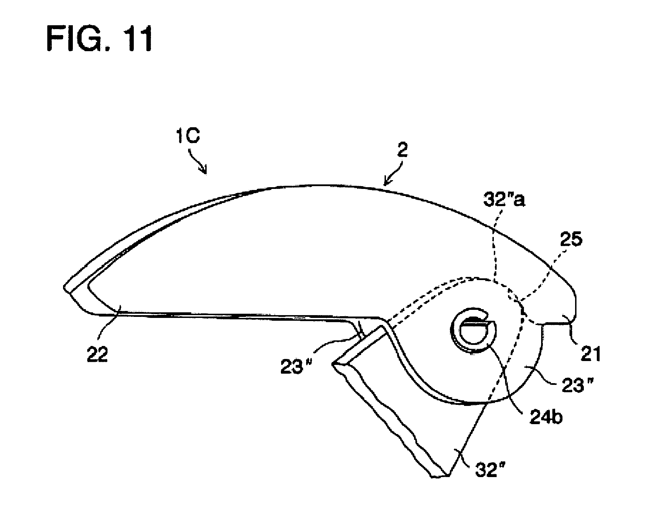

FIG. 11 illustrates a fourth embodiment of the present invention. As shown in FIG. 11, a tensioning device 1C differs from that of the third embodiment in that a rolled pin 24b is used in lieu of the round pivoting pin 24a of the third embodiment. Also, similar to the second embodiment, the proximal end portion 21 of the tensioner arm 2 is bifurcated to form a pair of leg portions 23". The bracket portion 32" is inserted into the pair of leg portions 23". Also, between the pair of leg portions 23" of the proximal end portion 21 of the tensioner arm 2, the concavely curved surface 25 is formed so as to contact and slide along a convexly curved surface 32"a of the bracket portion 32" during rotation of the tensioner arm 2.

In this case as well, during rotation of the tensioner arm 2, the concavely curved surface 25 of the proximal end portion 21 of the tensioner arm 2 slides on the convexly curved surface 32"a of the bracket portion 32" of the tensioner body, thereby preventing excessive compressive load from being applied to the rolled pin 24b from the chain. As a result, durability of the entire device is advanced. Moreover, in this case, since a commercially available rolled pin is used, the manufacturing cost can be reduced and a tight fit relative to the pin aperture is easily achieved.

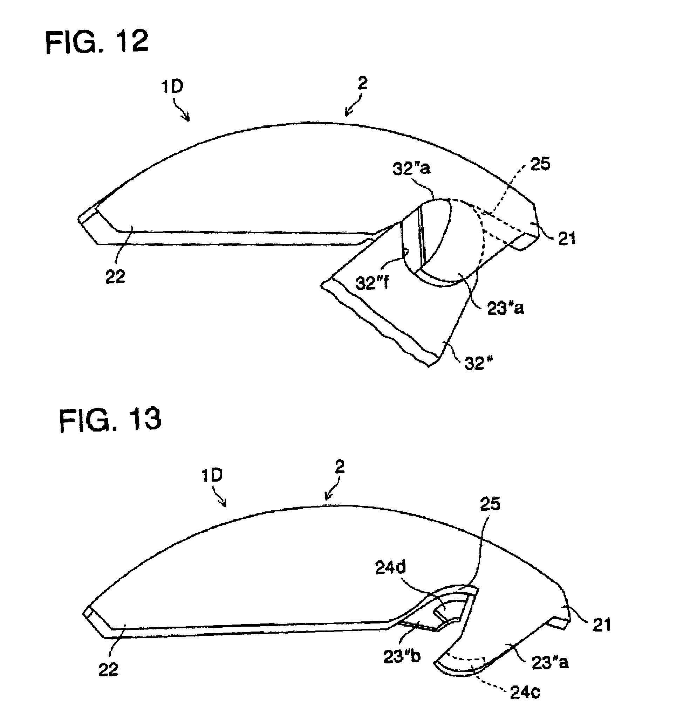

FIGS. 12 through 14 illustrate a fifth embodiment of the present invention. As shown in FIGS. 12 and 13, in a tensioning device 1D, a proximal end portion 21 of the tensioner arm 2 has a pair of leg portions 23"a, 23"b but these leg portions are not oppositely disposed and offset to each other. The leg portion 23"a extends longer than the leg portion 23"b. The leg portion 23"a has a pivoting key 24c formed integrally therewith at the lower edge portion and extending arcuately in the downwardly convex shape. Similarly, the leg portion 23"b has a pivoting key 24d formed integrally therewith at the lower edge portion and extending arcuately in the upwardly convex shape.

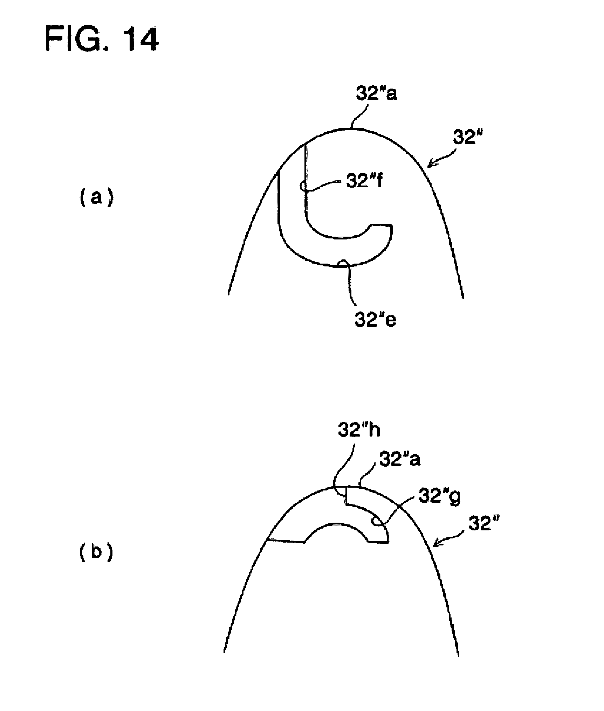

On a first principal face (or a front side face in FIG. 12) of the bracket portion 32", a curved groove shown in FIG. 14(a) is formed. This curved groove is sized so that the pivoting key 24c of the leg portion 23"a is slidably engaged with the curved groove. The curved groove is formed of a linearly extending portion 32"f in an upward and downward direction and an arcuately curved portion 32"e extending in connection with the linearly extending portion 32"f and in the downwardly convex shape.

On a second principal face (or a backside face in FIG. 12) of the bracket portion 32", a curved groove shown in FIG. 14(b) is formed. This curved groove is sized so that the pivoting key 24d of the leg portion 23"b is slidably engaged with the curved groove. The curved groove is formed of an arcuately curved portion 32"g extending in the upwardly convex shape and a notch portion 32"h extending in connection with the arcuately curved portion 32"g and opening upward and sideward.

Also, between the leg portions 23"a and 23"b of the proximal end portion 21 of the tensioner arm 2, the concavely curved surface 25 is formed so as to contact and slide along a convexly curved surface 32"a of the bracket portion 32" during rotation of the tensioner arm 2.

When the tensioner arm 2 is fitted to the bracket portion 32", first, the bracket portion 32" is held in a state shown in FIG. 14. Then, with the tensioner arm 2 is moved upright by rotating it 90 degrees around the proximal end portion 21 from the state shown in FIG. 13, the pivoting key 24c of the leg portion 23"a is inserted into the linearly extending portion 32"f of the curved groove on the first principal face of the bracket portion 32" and the pivoting key 24d of the leg portion 23"b is inserted into the notch 32"h of the curved groove on the second principal face of the bracket portion 32".

Thereafter, the tensioner arm 2 is rotated 90 degrees downwardly around the proximal end portion 21 (see FIG. 13). Then, the pivoting key 24c of the leg portion 23"a moves along the arcuately curved portion 32"e of the curved groove on the first principal side of the bracket portion 32", and the pivoting key 24d of the leg portion 23"b moves along the arcuately curved portion 32"g of the curved groove on the second principal side of the bracket portion 32". In such a manner, when the pivoting key 24c, 24d is engaged with the arcuately curved portion 32"e, 32"g of the corresponding curved groove, the tensioner arm 2 will not be easily disengaged from the bracket portion 32".

In this case as well, during rotation of the tensioner arm 2, the concavely curved surface 25 of the proximal end portion 21 of the tensioner arm 2 slides on the convexly curved surface 32"a of the bracket portion 32" of the tensioner body 3, thereby preventing excessive compressive load from being applied to the pivoting key 24c, 24d from the chain. As a result, durability of the entire device is advanced.

In each of the above-mentioned embodiments, an example was shown where a concavely curved surface is formed at the tensioner arm and a convexly curved surface is formed at the tensioner body, but the present invention is not limited to such an example. In contrast to the above-mentioned embodiments, a convexly curved surface may be formed at the tensioner arm and a concavely curved surface corresponding to the convexly curved surface may be formed at the tensioner body.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A tensioning device to impart tension to a chain or belt comprising:
a tensioner arm having a proximal end with a curved engaged surface formed on a lower surface thereof, a distal end opposite the proximal end, and an arcuately curved chain sliding surface extending between the proximal end and the distal end;
a supporting member having an engaging surface for slidably contacting the engaged surface of the proximal end of the tensioner arm, such that the force exerted by a chain passing over the chain sliding surface is transmitted from the engaged surface to the engaging surface;
a pivot coupling the tensioner arm to the supporting member; and
a biasing element between the supporting member imparting a resilient force on the distal end of the tensioner arm.

2. The tensioning device of claim 1, wherein the biasing element is a spring.

3. The tensioning device of claim 1, wherein the engaged surface is concavely curved and the engaging surface is convexly curved.

4. The tensioning device of claim 1, wherein the engaged surface is convexly curved and the engaging surface is concavely curved.

5. The tensioning device of claim 1, wherein when the tensioner arm is in a nearly upright position, the pivot coupling the tensioner arm to the supporting member disengages, permitting separation of the tensioner arm from the supporting member.

6. The tensioning device of claim 1, wherein the pivot comprises at least one bracket having at least one pin aperture for receiving at least one pin.

7. The tensioning device of claim 6, wherein the bracket is part of the supporting member.

8. The tensioning device of claim 6, wherein the bracket is part of the tensioner arm.

9. The tensioning device of claim 6, wherein the at least one pin is received by the at least one pin aperture of the pivot.

10. The tensioning device of claim 6, wherein the pin has a circular cross-section.

11. The tensioning device of claim 6, wherein the pin is rolled.

12. The tensioning device of claim 6, wherein the at least one pin has a small width, a large width greater than the small width.

13. The tensioning device of claim 12, wherein the at least one pin has a non-circular cross-section.

14. The tensioning device of claim 12, wherein the at least one pin has a D-shaped cross-section.

15. The tensioning device of claim 12, wherein the at least one pin has square cross-section.

16. The tensioning device of claim 12, wherein the at least one bracket has groove with an extension from the outside surface of the bracket to the pin aperture, such that the small width of the pin passes through the groove and the large width of the pin is prevented from passing through the groove and the groove is oriented in a direction in which the pin will not disengage from the groove during operation of the tensioner.

17. The tensioning device of claim 6, wherein one of the brackets is longer than the other bracket.

18. The tensioning device of claim 17, wherein the brackets further comprise pivoting keys.

19. The tensioning device of claim 18, wherein one of the pivoting keys extends arcuately in a downward convex shape and the other pivoting key extends arcuately in an upward convex shape.

20. The tensioning device of claim 1,wherien the proximal end of the tensioner arm further comprises a downwardly extended flange portion for receiving the supporting member.

21. The tensioning device of claim 1, further comprising a regulating portion having a stop and a contact portion.

22. The tensioning device of claim 21, wherein the stop is part of the tensioner arm and the contact portion is part of the supporting member.

23. The tensioning device of claim 21, wherein the stop is part of the supporting member and the contact portion is part of the tensioner arm.
